# EUROPEAN PATENT SPECIFICATION

(11) **EP 0 299 806 B1**
(45) Date of publication and mention of the grant of the patent: **17.03.1993**
(21) Application number: 88306570.8
(22) Date of filing: 18.07.1988
(51) Int. Cl.: G01G 3/142, G01G 3/14, G01G 3/18

(54) **Weighing device employing strain gauges**
Wägeapparat mit Dehnungsmessstreifen
Dispositif de pesage employant des jauges de contrainte

(30) Priority: 16.07.1987 JP 177745/87; 16.07.1987 JP 177746/87
(43) Date of publication of application: 18.01.1989
(73) Proprietor: ISHIDA SCALES MFG. CO. LTD., Kyoto-shi Kyoto 606 (JP)
(72) Inventor: Naito, Kazufumi, Ohtsu-shi Shiga (JP); Nishide, Seiji, Koga-gun Shiga (JP)
(74) Representative: Fane, Christopher Robin King

(56) References cited:
- EP-A- 0 094 290
- US-A- 4 541 496
- PATENT ABSTRACTS OF JAPAN, vol. 10, no. 202 (P-477)[2258], 15th July 1986; & JP-A-61 44 326 (ISHIDA SCALES MFG. CO. LTD) 04-03-1986
- PATENT ABSTRACTS OF JAPAN, vol. 10, no. 212 (P-480)[2268], 24th July 1986; & JP-A-61 51 526 (TOKYO ELECTRIC CO. LTD) 14-03-1986

## Description

The present invention relates to a weighing device employing strain gauges, suitable for use in a load cell-type electronic weighing scale, for example.

Such weighing devices include a load cell comprising strain gauges having an electrical resistance which varies in dependence upon the strain on the load cell caused by the load of an article being weighed, the strain gauge being attached to a strain sensing area of a strain generator. Typically, an analog weight signal issued by the load cell is amplified, converted to a digital signal by an A/D converter, and then applied to a display unit for displaying information on the weight, etc.

In particular, EP-A-0067637 discloses a weighing device of the kind including a strain generator arranged for yielding under a load to be weighed, thereby to apply strain in opposite respective senses to strain gauge circuitry comprising first and second strain gauges mounted respectively at first and second locations on the strain generator so that respective electrical impedance values of the first and second strain gauges change in opposite respective senses when such yielding occurs, the strain gauge circuitry being connected between first and second power supply lines of load detection circuitry of the device, which circuitry has one input point connected to said strain gauge circuitry, for providing an electrical output which is a measure of the load being weighed.

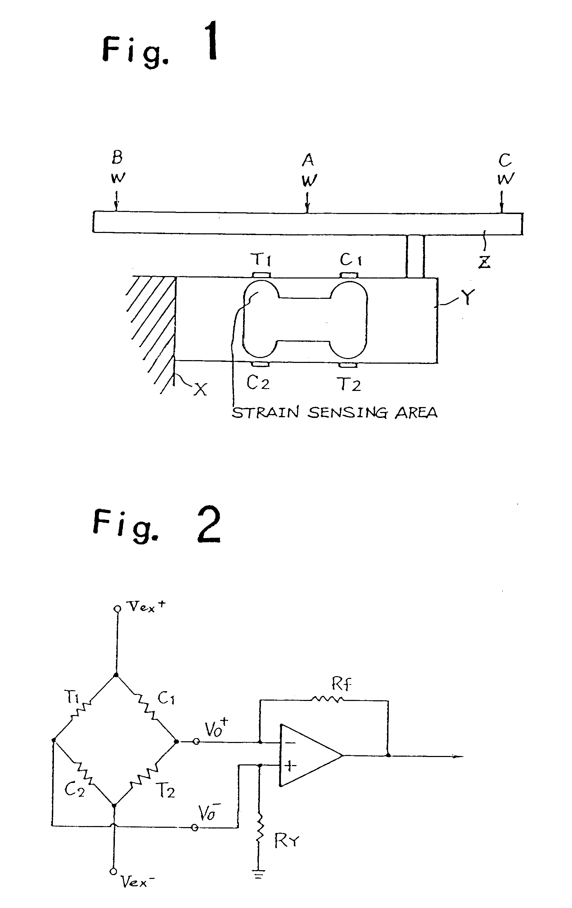

As shown in Figures 1 and 2 of the accompanying drawings, the strain gauge circuitry of such a device has four strain gauges C₁, C₂, T₁, T₂ attached to a strain generator Y mounted on a support X, for detecting a weight W applied to a scale plate Z.

The strain gauges C₁, C₂, T₁, T₂ attached to the strain generator Y at the positions shown in Fig. 1 are electrically connected to form a full bridge circuit (Wheatstone bridge) having input terminals to which reference voltages Vex⁺, Vex⁻ are applied. When a load is applied to the strain generator and a strain is produced in the strain sensing area, the resistances of the strain gauges C₁, C₂ and the resistances of the strain gauges T₁, T₂ are varied in mutually-opposite directions.

The full bridge circuit issues output voltages V₀+, V₀- which are applied to inverting and non-inverting input terminals of an operational amplifier. A voltage divider resistor RY is connected to the non-inverting input terminal of the operational amplifier, whereas a feedback resistor Rf is connected to the inverting input terminal thereof.

The output voltage $\text{(V₀+) - (V₀-)}$ of the full bridge circuit is expressed as follows: It is assumed for simplicity that the resistances of the strain gauges are selected so as to be $\text{T1 = T2 = C1 = C2 = R}$ . 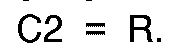
(1) The resistances when the load W is applied to the scale plate Z at a position A are given by:

   $\text{T1 = T2 = R + ΔR (1)}$

   $\text{C1 = C2 = R - ΔR (2)}$
(2) The resistances when the load W is applied to the scale plate Z at a position B are given by:

   $\text{T1 = R + ΔR - ΔRm (3)}$

   $\text{T2 = R + ΔR + ΔRm (4)}$

   $\text{C1 = R - ΔR - ΔRm (5)}$

   $\text{C2 = R - ΔR + ΔRm (6)}$
(3) The resistances when the load W is applied to the scale plate Z at a position C are given by:

   $\text{T1 = R + ΔR + ΔRm (7)}$

   $\text{T2 = R + ΔR - ΔRm (8)}$

   $\text{C1 = R - ΔR + ΔRm (9)}$

   $\text{C2 = R - ΔR - ΔRm (10)}$

In each of the above cases (1), (2), (3), the output voltage (V₀+) - (V₀-) of the full bridge circuit can be determined by:

$\text{(V₀+) - (V₀-) = (ΔR/R)(Vex⁺ - Vex⁻) (11)}$

Where the strain gauges are connected as a full bridge as shown in Fig. 2, the combined resistance thereof is expressed by:

$\text{r = {(T1 + C2)(T2 + C1)}/{(T1 + C2) + (T2 + C1) (12)}$

Therefore, assuming that $\text{T1 = T2 = C1 = C2 = R}$ ,

$\text{r = {(2R) x (2R)}{(2R) + (2R)} = R (13)}$

Therefore, the combined resistance of the full bridge is the same as the resistance of each of the strain gauges. As a result, the current flowing through the full bridge is large, resulting in high electrical power consumption. Since the bridge consumes a large amount of electrical power, it is difficult in practice to construct electronic scales having liquid crystal displays and CMOS-ICs and drive them with dry cell batteries.

According to the present invention, there is provided a weighing device of the kind including a strain generator arranged for yielding under a load to be weighed, thereby to apply strain in opposite respective senses to strain gauge circuitry comprising first strain gauges and second strain gauges mounted respectively at first and second locations on the strain generator so that respective electrical impedance values of the first and second strain gauges change in opposite respective senses when such yielding occurs, the strain gauge circuitry being connected between first and second power supply lines of load detection circuitry of the device, which circuitry has one input point connected to said strain gauge circuitry, for providing an electrical output which is a measure of the load being weighed; characterised in that said first and second strain gauges are connected together in series between said first and second power supply lines, said one input point of said load detection circuitry being connected to a circuit node between the first and second strain gauges, and in that the input signal to the load detection circuitry, from which signal the electrical output is derived by that circuitry, is the potential difference between the said circuit node and a preset reference-voltage point to which a second input point of the load detection circuitry is connected.

The electrical power consumption of the strain gauge circuitry of such a weighing device can be lower than that of comparable prior art strain gauge circuitry, since the overall resistance of the circuitry can be greater.

In order to prevent the output of the load detector circuit, which is indicative of the applied load, varying owing to a change in the resistance of the strain gauge circuitry caused by a change in ambient temperature, it has been known for a temperature-compensating resistor to be connected between an output terminal of the prior art strain gauge circuitry and the operational amplifier. With such an arrangement, however, the resistance of the chosen temperature-compensating resistor is determined by the resistance of the strain gauge circuitry, and it is tedious and time-consuming to select the resistance of the temperature-compensating resistor.

Accordingly, a weighing device embodying the present invention preferably includes a temperature-compensating resistor which is connected in a circuit separate from the strain gauge circuitry.

Reference will now be made, by way of example, to the accompanying drawings, in which:
Fig. 1 (described above) shows a side elevational view of a load detector;
Fig. 2 is a circuit diagram of a conventional load detecting circuit;
Fig. 3 is a circuit diagram, partly in block form, of a first weighing device embodying the present invention;
Fig. 4 is a circuit diagram, partly in block form, of a second weighing device embodying the present invention;
Figs. 5 and 6 are circuit diagrams for use in explaining an operation of the second weighing device;
Fig. 7 is a circuit diagram, partly in block form, of a third weighing device embodying the present invention; and
Fig. 8 is a circuit diagram, partly in block form, of a fourth weighing device embodying the present invention.

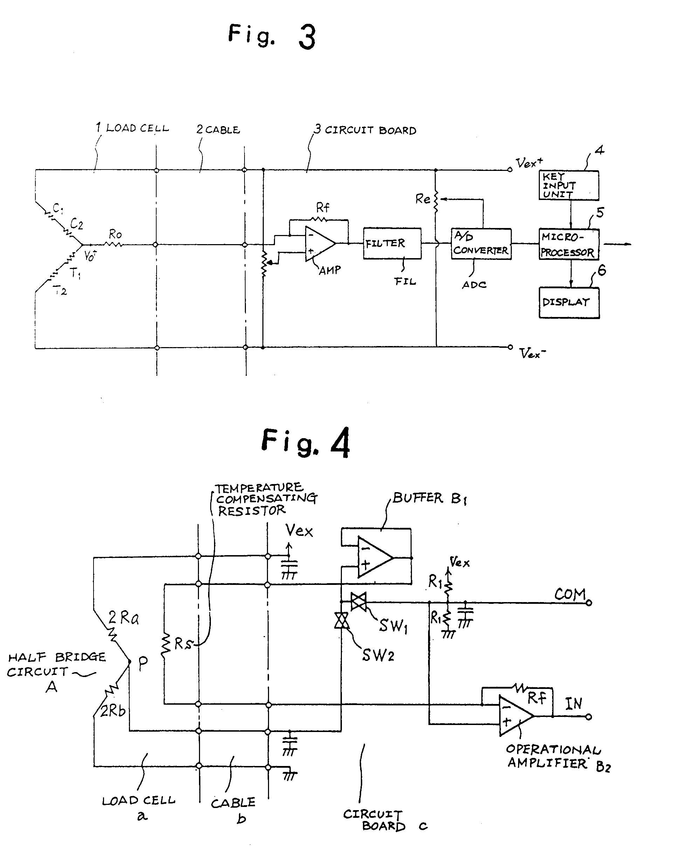

As shown in Fig. 3, a first weighing device embodying the present invention includes four strain gauges T1, T2, C1, C2 attached to a strain generator Y (not shown). The strain gauges T1, T2, which are mounted on respective expansive sides of strain sensing areas of the strain generator (i.e. in diagonally opposite relation), are connected in series with one another, and the strain gauges C1, C2, which are mounted on respective contractive sides of the strain sensing area in diagonally opposite relation, are also connected in series with one another, to form a "half-bridge" circuit which issues an output signal Vo+ from the junction between the two series-connected circuits. Assuming that $\text{T1 = T2 = C1 = C2 = R}$ , the total resistance r' of the half bridge circuit is given by:

$\text{r' = (C1 + C2) + (T1 + T2) = 4R (14)}$

Since the total resistance of the half bridge circuit is four times greater than the resistance of a comparable conventional full bridge circuit, the half bridge circuit has a greater current limiting ability, thereby lowering the electric power consumption. The output voltage of the half bridge circuit is indicated by:

$\text{V0⁺ = {(Vex⁺ - Vex⁻)/2} + (ΔR/2R)(Vex⁺ - Vex⁻) (15)}$

The output voltage of the half-bridge circuit remains constant irrespective of the position (A, B, or C-Fig. 1) where the load is applied.

The magnitude of the output signal from the half bridge circuit is 1/2 of the magnitude of the output signal from the conventional full bridge circuit of strain gauges but the output signal from the half bridge circuit is proportional to the applied load as with the full bridge circuit.

In Fig. 3, the weighing device has a load cell 1 including the half bridge and a compensating resistor R0 coupled to the output terminal of the half bridge for compensating for a temperature-dependent change in the output signal. The load cell 1 is electrically connected to a circuit board 3 by means of cables 2. The compensating resistor R0 serves to vary the amplification factor of an operational amplifier AMP in dependence upon a temperature-dependent change of the resistance R₀ of the strain generator, for temperature compensation of the Youngs's modulus of the strain generator to effect temperature compensation of the output signal, as disclosed in Japanese Laid-Open Patent Publication No. 63-58202. The operational amplifier AMP, a filter FIL, and an A/D converter ADC are mounted on the circuit board 3. The output signal from the half bridge circuit is applied, via the compensating resistor R0, to an inverting input terminal of the operational amplifier AMP. The output terminal of the operational amplifier AMP is connected to the filter FIL which removes high-frequency components from the output signal of the operational amplifier AMP. The output signal from the filter FIL is converted by the A/D converter ADC to a digital signal which is applied to a microprocessor 5. The microprocessor 5 processes the signal according to prescribed arithmetic operations to apply data, such as a net weight, to a display unit 6 and a signal to a label printer (not shown) for example. A signal produced by a key input unit 4 is supplied to the microprocessor 5. A reference voltage produced by a resistor Re is applied to the A/D converter ADC.

In this embodiment, the strain gauges are attached to the strain sensing area of a two-beam-type strain generator, and those strain gauges which are disposed in diagonally opposite relationship are connected in series with each other to form a half bridge circuit. With such an arrangement, the electric power consumption of the load cell can be reduced, and hence there can be realised a load-cell electronic weight scale which can employ a liquid crystal display unit and CMOS ICs and which can be driven by a dry cell.

Although not shown in the first embodiment, a selector circuit may be connected to a stage preceding the operational amplifier AMP for selecting either a signal generated from the junction between the first and second strain gauges of the half bridge or a reference voltage. When a load applied to the strain generator is to be measured, the selector circuit selects the signal from the junction between the first and second strain gauges. Upon calibration, the selector circuit selects the reference voltage. The selector circuit is omitted from illustration for the sake of brevity, but will be described in embodiments which will be described below.

In each of the embodiments which follow, a temperature compensating resistor is disposed in a circuit separate from the load cell circuit.

Fig. 4 shows a second weighing device embodying the present invention. For the sake of brevity, in Fig. 4 the resistances of the strain gauges T1, T2 of Fig. 3 are shown as equal resistances Ra, and the resistances of the strain gauges C1, C2 of Fig. 3 are shown as equal resistances Rb. A temperature compensating resistor is indicated by Rs.

As illustrated in Fig. 4, the four strain gauges 2Ra, 2Rb attached to a strain generator (not shown) form a half-bridge circuit A, and the junction P between the strain gauges 2Ra, 2Rb is connected to a reference potential terminal COM via mode selector switches SW1, SW2 which select one of a weighing mode and a drift compensating mode (calibration mode). With this half bridge circuit, if $\text{Ra = Rb = R}$ , then the total resistance r is 4R, and hence the half bridge circuit can be driven with lower electric power as compared with a comparable conventional full bridge circuit.

The junction P is coupled to an operational amplifier B2 through the switch SW2, a buffer B1, and the temperature compensating resistor Rs in the load cell a. The buffer B1 serves as a non-inverting amplifier with a gain of 1, and the operational amplifier B2 as an inverting amplifier. The output terminal of the operational amplifier B2 is connected through a low-pass filter to an input terminal IN of a subsequent control circuit such as an A/D converter. The mode selector switches SW1, SW2 are in the form of analog switches. The mode selector switches SW1, SW2, a pair of resistors R1, a feedback resistor Rf, the buffer B1, and the operational amplifier B2 are mounted on a circuit board c.

The temperature compensating resistor Rs varies the amplification factor of the inverting amplifier, constituted by the operational amplifier B2 and the resistors Rs, Rf, in dependence upon the temperature of the strain generator, for temperature compensation of the Young's modulus of the strain generator of the strain-gauge load cell to effect temperature compensation of the output voltage corresponding to a span.

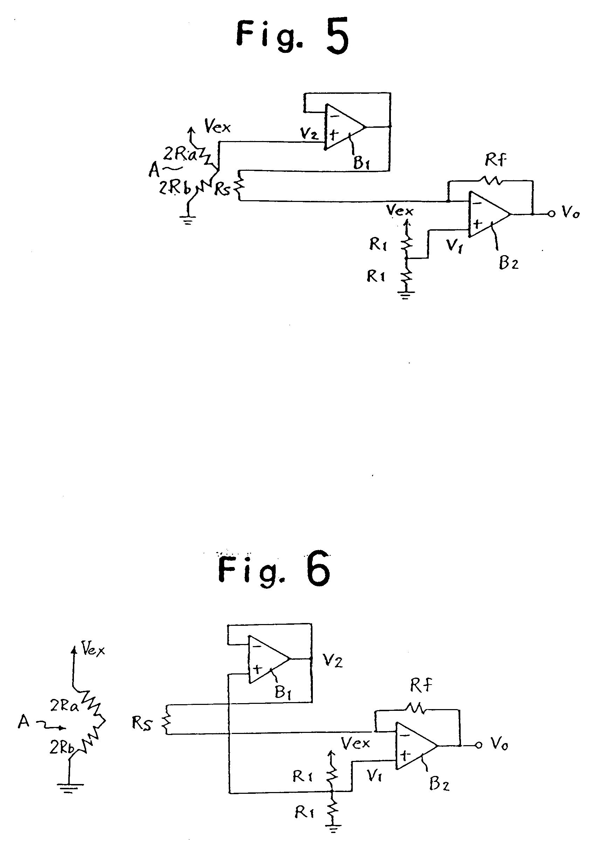

Fig. 5 is a circuit diagram of the weighing device of Fig. 4 when the weighing mode is selected. In the weighing mode, the switch SW1 of Fig. 4 is turned off, whereas the switch SW2 is turned on.

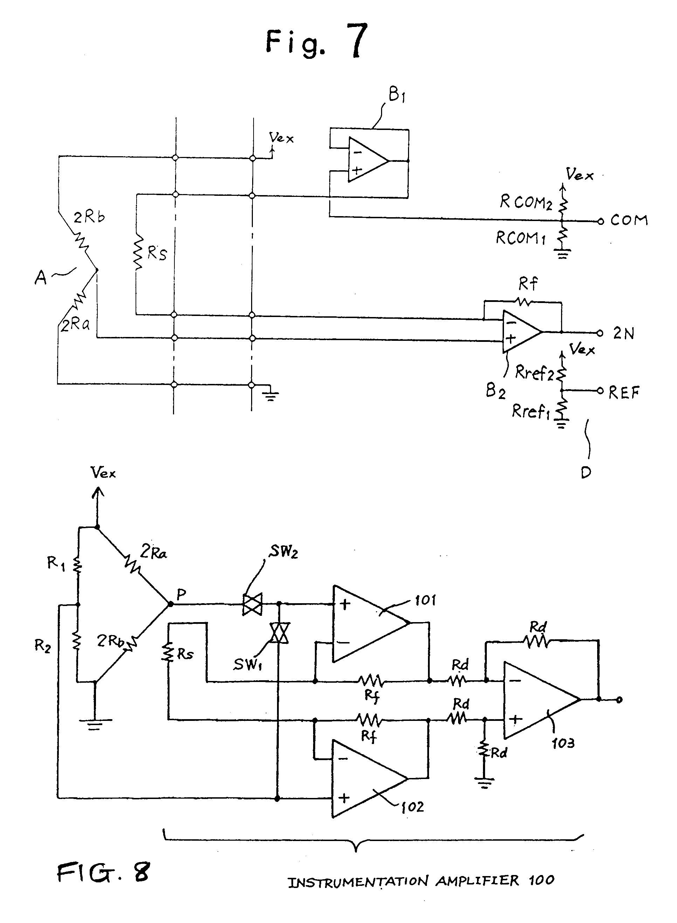

Fig. 6 is a circuit diagram of the weighing device of Fig. 4 when the drift compensating mode is selected. The switch SW1 is turned on and the switch SW2 is turned off, and the amount of drift which is developed at this time is stored as a bias value, which is compensated for by a microcomputer through arithmetic operations. According to an embodiment of the present invention, as shown, drift compensation can be carried out by a simple circuit arrangement composed of the two switches.

Since in drift-compensating mode no current flows from the bridge circuit into the temperature compensating resistor Rs as shown in Fig. 4, the span can be temperature-compensated irrespective of the resistance of the bridge. The circuit arrangement is made simple because it is energized by a power supply (of 5 V for example) which is also shared by the load cell for its energization.

Fig. 7 is a circuit diagram of a third weighing device embodying the present invention. An output signal from the half bridge circuit is supplied to the non-inverting input terminal of the operational amplifier B2, and the reference potential terminal COM is coupled to the non-inverting input terminal of the buffer B1. The operation and advantages of the third weighing device are substantially the same as those of the second weighing device.

As shown in Fig. 8, in a fourth weighing device embodying the present invention an output signal from the half bridge circuit is applied to an instrumentation amplifier 100, which has two symmetrically arranged operational amplifiers 101, 102 and an operational amplifier 103 for receiving output signals from the operational amplifiers 101, 102. The central point or junction P of the half bridge is connected to positive terminals (+) of the operational amplifiers 101, 102. Series-connected resistors R1, R2 are connected in parallel with the half bridge. The junction between the resistors R1, R2 is joined to the positive terminal (+) of the operational amplifier 102. The two resistors R1, R2 are positioned where no strain is developed by the strain generator, or comprise ordinary resistors disposed near the strain generator and having resistances that are several times greater than those of the strain gauges. Therefore, the electric power consumption by these two resistors R1, R2 is negligible as compared with that of the strain gauges. A temperature compensating resistor Rs is connected between negative terminals (-) of the operational amplifiers 101, 102, which have output terminals connected respectively to the negative and positive terminals(-, +)of the operational amplifier 103.

In the circuitry of Fig. 8, when the weighing mode is selected, the switch SW1 is turned off and the switch SW2 is turned on, and when the drift compensating mode is selected, the switch SW1 is turned on and the switch SW2 is turned off.

The temperature compensating resistor Rs varies the amplification factor of the instrumentation amplifier 100 for temperature compensation of the Young's modulus of the strain generator of the strain-gauge load cell to carry out temperature compensation of the output voltage corresponding to a span.

According to the present invention, since the load is detected by a "half-bridge" circuit composed of a plurality of strain gauges attached to a strain generator, the electrical power consumption of the circuitry is reduced. Since, in an embodiment of the present invention, no current directly flows from the half-bridge circuit into the temperature-compensating resistor, the span can be temperature-compensated irrespective of the resistance of the bridge. Furthermore, the weighing mode and the drift compensating mode can easily be selected by adding the switches.

Although certain preferred embodiments have been shown and described, it should be understood that many changes and modifications may be made therein without departing from the scope of the appended claims.

## Claims

1. A weighing device of the kind including a strain generator arranged for yielding under a load to be weighed, thereby to apply strain in opposite respective senses to strain gauge Circuitry (C₁, C₂; T₁, T₂) comprising first strain gauges (C₁, C₂) and second strain gauges (T₁, T₂) mounted respectively at first and second locations on the strain generator so that respective electrical impedance values of the first and second strain gauges (C₁, C₂; T₁, T₂) change in opposite respective senses when such yielding occurs, the strain gauge circuitry (C₁, C₂; T₁, T₂) being connected between first and second power supply lines (Vₑₓ+, Vₑₓ-) of load detection circuitry (AMP) of the device, which circuitry (AMP) has one input point connected to said strain gauge circuitry (C₁, C₂; T₁, T₂), for providing an electrical output which is a measure of the load being weighed; characterised in that said first (C₁, C₂) and second (T₁, T₂) strain gauges are connected together in series between said first and second power supply lines (Vₑₓ+, Vₑₓ-), said one input point of said load detection circuitry (AMP) being connected to a circuit node between the first (C₁, C₂) and second (T₁, T₂) strain gauges, and in that the input signal to the load detection circuitry (AMP), from which signal the electrical output is derived by that circuitry, is the potential difference between the said circuit node and a preset reference-voltage point to which a second input point of the load detection circuitry (AMP) is connected.

2. A device as claimed in claim 1, wherein said load detection circuitry (Rₛ, B₁, B₂; Rₛ, 100) includes temperature compensation means for controlling said electrical output of that circuitry (Rₛ, B₁, B₂; Rₛ, 100) in such a way that said electrical output is substantially independent of changes in temperature experienced by said strain gauge circuitry (C₁, C₂; T₁, T₂), which temperature compensation means include a temperature-sensitive resistor (Rₛ) operatively arranged such that the electrical impedance value thereof changes in dependence upon a change in the temperature experienced by said strain gauge circuitry (C₁, C₂; T₁, T₂), the temperature-sensitive resistor (Rₛ) being connected such that no current flows directly thereinto from said strain gauge circuitry (C₁, C₂; T₁, T₂).

3. A device as claimed in claim 2, wherein said load detection circuitry (Rₛ, B₁, B₂; Rₛ, 100) comprises buffer circuitry (B₁) connected to receive a voltage signal developed at said circuit node of the strain gauge circuitry (C₁, C₂; T₁, T₂), said temperature-sensitive resistor (Rₛ) being connected between an output point of said buffer circuitry (B₁) and an output circuit (B₂) of the load detection circuitry (Rₛ, B₁, B₂; Rₛ, 100).

4. A device as claimed in any preceding claim, further comprising selection means (SW₁, SW₂) operable, during a calibration mode of the device, to disconnect said one input point of the load detection circuitry (Rₛ, B₁, B₂; Rₛ, 100) from the said strain gauge circuitry (C₁, C₂; T₁, T₂) and to supply a reference voltage signal thereto.

## Patentansprüche

1. Wägevorrichtung des Typs mit einem Dehnungserzeuger, der derart angeordnet ist, daß er unter einer zu wiegenden Last nachgibt, um dadurch Dehnung in jeweils entgegengesetzten Richtungen auf eine Dehnungsmeßschaltung (C₁, C₂; T₁, T₂) auszuüben, welche erste Dehnungsmesser (C₁, C₂) und zweite Dehnungsmesser (T₁, T₂) aufweisen, die jeweils an ersten und zweiten Stellen an dem Dehnungserzeuger angebracht sind, so daß jeweilige elektrische Impedanzwerte der ersten und zweiten Dehnungsmesser (C₁, C₂; T₁, T₂) sich beim Eintreten eines solchen Nachgebens in jeweils entgegengesetzten Richtungen verändern, wobei die Dehnungsmeßschaltung (C₁, C₂; T₁, T₂) zwischen einer ersten und einer zweiten Versorgungsleitung (Vₑₓ+, Vₑₓ-) einer Lasterkennungsschaltung (AMP) der Vorrichtung verbunden ist, wobei ein Eingangspunkt der Schaltung (AMP) zum Liefern eines elektrischen Ausgangssignals, das ein Meßwert der gewogenen Last ist, mit der Dehnungsmeßschaltung (C₁, C₂; T₁, T₂) verbunden ist; dadurch gekennzeichnet, daß die ersten (C₁, C₂) und zweiten Dehnungsmesser (T₁, T₂) miteinander in Reihe zwischen der ersten und der zweiten Versorgungsleitung (Vₑₓ+, Vₑₓ-) verbunden sind, wobei der eine Eingangspunkt der Lasterkennungsschaltung (AMP) mit einem Schaltungsknoten zwischen den ersten (C₁, C₂) und zweiten Dehnungsmessern (T₁, T₂) verbunden ist, und daß das Eingangssignal an die Lasterkennungsschaltung (AMP), aus dem das elektrische Ausgangssignal durch diese Schaltung abgeleitet wird, die Potentialdifferenz zwischen dem Schaltungsknoten und einem voreingestellten Referenzspannungspunkt ist, mit welchem ein zweiter Eingangspunkt der Lasterkennungseinrichtung (AMP) verbunden ist.

2. Vorrichtung nach Anspruch 1, bei der die Lasterkennungsschaltung (Rₛ, B₁, B₂; Rₛ, 100) Temperaturkompensationseinrichtungen aufweist, zum Steuern des elektrischen Ausgangssignals dieser Schaltung (Rₛ, B₁, B₂; Rₛ, 100) derart, daß das elektrische Ausgangssignal im wesentlichen unabhängig von Temperaturveränderungen ist, denen die Dehnungsmeßschaltung (C₁, C₂; T₁, T₂) ausgesetzt ist, wobei die Temperaturkompensationseinrichtungen einen temperaturempfindlichen Widerstand (Rₛ) aufweisen, der betriebsmäßig derart vorgesehen ist, daß sich sein elektrischer Impedanzwert in Abhängigkeit von der Temperaturveränderung ändert, der die Dehnungsmeßschaltung (C₁, C₂; T₁, T₂) ausgesetzt ist, wobei der temperaturempfindliche Widerstand (Rₛ) derart geschaltet ist, daß aus der Dehnungsmeßschaltung (C₁, C₂; T₁, T₂) kein Strom direkt in ihn fließt.

3. Vorrichtung nach Anspruch 2, bei der die Lasterkennungsschaltung (Rₛ, B₁, B₂; Rₛ, 100) eine Pufferschaltung (B₁) aufweist, die zum Empfang eines am Schaltungsknoten der Dehnungsmeßschaltung (C₁, C₂; T₁, T₂) entwickelten Spannungssignals verbunden ist, wobei der temperaturempfindliche Widerstand (Rₛ) zwischen einen Ausgangspunkt der Pufferschaltung (B₁) und eine Ausgangsschaltung (B₂) der Lasterkennungsschaltung (Rₛ, B₁, B₂; Rₛ, 100) geschaltet ist.

4. Vorrichtung nach einem der vorhergehenden Ansprüche, ferner mit Auswahleinrichtungen (SW₁, SW₂), die während eines Kalibrierungsmodus der Vorrichtung derart betreibbar sind, daß sie den einen Eingangspunkt der Lasterkennungsschaltung (Rₛ, B₁, B₂; Rₛ, 100) von der Dehnungsmeßschaltung (C₁, C₂; T₁, T₂) trennen und ein Referenzspannungssignal an diese liefern.

## Revendications

1. Dispositif de pesage du type employant un générateur de contrainte disposé pour se déformer sous une charge à peser, afin d'appliquer ainsi une contrainte en des sens respectifs opposés à un circuit de jauges de contraintes (C₁, C₂; T₁, T₂) comprenant des premières jauges de contraintes (C₁, C₂) et des secondes jauges de contraintes (T₁, T₂) montées respectivement en des premier et second emplacements sur le générateur de contrainte de telle sorte que les valeurs respectives d'impédance électrique des première et seconde jauges de contrainte (C₁, C₂; T₁, T₂) changent dans des sens respectifs opposés quand se produit une telle déformation, le circuit de jauges de contrainte (C₁, C₂; T₁, T₂) étant relié entre une première et une seconde lignes d'alimentation en puissance (Vₑₓ₊, Vₑₓ₋) du circuit de détection de charge (AMP) du dispositif, circuit (AMP) qui comporte un premier point d'entrée relié audit circuit de jauges de contraintes (C₁, C₂; T₁, T₂), afin de fournir un signal de sortie électrique qui est une mesure de la charge que l'on pèse, caractérisé en ce que lesdites premières (C₁, C₂) et secondes (T₁, T₂) jauges de contraintes sont connectées ensemble en série entre lesdites première et seconde lignes d'alimentation en puissance (Vₑₓ₊, Vₑₓ₋), ledit premier point d'entrée dudit circuit de détection de charge (AMP) étant relié à un noeud de circuit entre les premières (C₁, C₂) et les secondes (T₁, T₂) jauges de contraintes, et en ce que le signal qui entre dans le circuit (AMP) de détection de charge, signal duquel est dérivé le signal électrique de sortie par ce circuit, est la différence de potentiel entre ledit noeud de circuit et un point de tension de référence préétabli auquel est relié un deuxième point d'entrée du circuit de détection de charge (AMP).

2. Dispositif selon la revendication 1, dans lequel ledit circuit de détection de charge (Rₛ, B₁, B₂ ; Rₛ, 100) inclut un moyen de compensation de température pour commander ledit signal de sortie électrique de ce circuit (Rₛ, B₁, B₂ ; Rₛ, 100) de telle façon que ledit signal de sortie électrique soit sensiblement indépendant des changements de température supportés par ledit circuit de jauges de contrainte (C₁, C₂; T₁, T₂), moyen de compensation de température qui inclut une thermistance (Rₛ) disposée de façon fonctionnelle de telle sorte que sa valeur d'impédance électrique varie en fonction du changement de température supporté par ledit circuit de jauges de contrainte (C₁, C₂; T₁, T₂), la thermistance (Rₛ) étant reliée de sorte que aucun courant ne s'y écoule directement en venant dudit circuit de jauges de contrainte (C₁, C₂; T₁, T₂).

3. Dispositif selon la revendication 2, dans lequel ledit circuit de détection de charge (Rₛ, B₁, B₂ ; Rₛ, 100) comporte un circuit tampon (B₁) connecté pour recevoir un signal de tension développé au niveau dudit noeud de circuit du circuit de jauges de contrainte (C₁, C₂; T₁, T₂), ladite thermistance (Rₛ) étant reliée entre un point de sortie dudit circuit tampon (B₁) et un circuit de sortie (B₂) du circuit de détection de charge (Rₛ, B₁, B₂ ; Rₛ, 100).

4. Dispositif selon l'une quelconque des précédentes revendications, qui comporte en outre des moyens de sélection (SW₁, SW₂) qui peuvent fonctionner, en mode d'étalonnage du dispositif, pour déconnecter ledit premier point d'entrée du circuit de détection de charge (Rₛ, B₁, B₂ ; Rₛ, 100) dudit circuit de jauges de contrainte (C₁, C₂; T₁, T₂) et pour y envoyer un signal de tension de référence.
